(19) Europäisches Patentamt

European Patent Office

Office européen des brevets

(11) **EP 4 564 939 A1**

(12) **EUROPEAN PATENT APPLICATION**
published in accordance with Art. 153(4) EPC

(43) Date of publication:
04.06.2025 Bulletin 2025/23

(21) Application number: 23845690.9

(22) Date of filing: 28.07.2023

(51) International Patent Classification (IPC):
*H04W 52/34* (2009.01)    *H04W 52/04* (2009.01)

(52) Cooperative Patent Classification (CPC):
H04W 52/04; H04W 52/34; H04W 72/044;
H04W 72/23; H04W 72/50

(86) International application number:
PCT/CN2023/109832

(87) International publication number:
WO 2024/022486 (01.02.2024 Gazette 2024/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.07.2022  CN 202210907673

(71) Applicant: Beijing Unisoc Communications
Technology Co., Ltd.
Beijing 100083 (CN)

(72) Inventor: MA, Dawei
Beijing 100083 (CN)

(74) Representative: Ipside
7-9 Allée Haussmann
33300 Bordeaux Cedex (FR)

(54) **COMMUNICATION METHOD AND APPARATUS, STORAGE MEDIUM, NETWORK DEVICE, AND TERMINAL DEVICE**

(57)    The present application provides a communication method and apparatus, a storage medium, a network device, and a terminal device, relates to the field of communication technology. The communication method includes: receiving power configuration information; determining a first transmit power of each signal of N signals based on the power configuration information, where the first transmit power of the signal of the N signals is a maximum transmit power of the signal when the N signals are transmitted simultaneously, and N is an integer greater than 1; and transmitting the N signals simultaneously based on the first transmit powers of the N signals, where a transmit power of each signal is not greater than the first transmit power of the signal when the N signals are transmitted, thereby providing a scheme of how to realize power control when multiple signals need to be transmitted simultaneously.

FIG. 2

## Description

This application claims priority to Chinese Patent Application No. 202210907673.X, filed to China National Intellectual Property Administration on July 29, 2022 and entitled "COMMUNICATION METHOD AND APPARATUS, STORAGE MEDIUM, NETWORK DEVICE, AND TERMINAL DEVICE", which is hereby incorporated by reference in its entirety.

## TECHNICAL FIELD

The present application relates to the field of communication technology and, in particular, to a communication method and apparatus, a storage medium, a network device, and a terminal device.

## BACKGROUND

In a new radio (New Radio, NR) system, as a communication signal band and a sensing signal band are getting closer, a fusion system that supports both communication and sensing functions within a single frequency band is a future trend.

In a communication and sensing integration scenario, a sensing signal and a communication signal need to be transmitted simultaneously in a frequency division multiplexing (Frequency Division Multiplexing, FDM) manner on the same carrier or different carriers within a specific frequency band. When a terminal device sends a signal, a maximum transmit power thereof needs to be constrained to achieve purposes of saving energy and reducing signal interference.

When multiple signals such as sensing signals and/or communication signals need to be transmitted simultaneously, how to achieve power control is a problem that needs to be solved urgently.

## SUMMARY

The present application provides a communication method and apparatus, a storage medium, a network device, and a terminal device, and provides a scheme of how to realize power control when multiple signals need to be sent simultaneously.

In order to achieve the above purpose, the present application provides the following technical solutions.

In a first aspect, a communication method is provided, including: receiving power configuration information; determining a first transmit power of each signal of N signals based on the power configuration information, where the first transmit power of the signal of the N signals is a maximum transmit power of the signal when the N signals are transmitted simultaneously, and N is an integer greater than 1; and transmitting the N signals simultaneously based on the first transmit powers of the N signals, where a transmit power of each signal is not greater than the first transmit power of the signal when the N signals are transmitted.

Optionally, the power configuration information includes a first configuration power of at least one signal of the N signals, and the first configuration power of the signal of the N signals is a configured maximum transmit power of the signal in a case that the N signals are transmitted simultaneously.

Optionally, the first transmit power of the signal of the N signals is the first configuration power of the signal.

Optionally, the power configuration information includes a maximum combined transmit power of the N signals.

Optionally, the maximum combined transmit power is a sum of transmit powers of the N signals on one or more carriers.

Optionally, the power configuration information further includes a second configuration power of at least one signal of the N signals, and the second configuration power of the signal of the N signals is a configured maximum transmit power of the signal in a case that the N signals are not transmitted simultaneously.

Optionally, each signal of the N signals has a priority, and the determining the first transmit power of each signal of the N signals based on the power configuration information includes: allocating the first transmit power to each signal in a descending order of the priorities of the N signals until an allocation of the maximum combined transmit power is completed, where for K signals with allocated first transmit powers, the first transmit power of each signal of the K signals is the second configuration power of the signal, or the first transmit powers of K-1 signals with highest priorities of the K signals are the second configuration powers of the signals, and the first transmit power of the $K^{th}$ signal is a power difference between the maximum combined transmit power and a sum of the first transmit powers of the K-1 signals, and K is less than or equal to N.

Optionally, the power configuration information further includes a bandwidth of each signal of the N signals.

Optionally, the first transmit power of each signal of the N signals is obtained by allocating the maximum combined transmit power based on a ratio of the bandwidth of the signal to a sum of the bandwidths of all the signals.

Optionally, the power configuration information further includes a second configuration power of at least one signal of the N signals.

Optionally, the communication method further including: determining a second transmit power of each signal of the N signals based on the power configuration information, where the second transmit power of the signal of the N signals is a maximum transmit power of the signal when the N signals are not transmitted simultaneously; and transmitting the N signals time-shared based on the second transmit powers of the N signals, where a transmit power of each signal is not greater than the second transmit power of the signal when the N signals are transmitted.

Optionally, the second transmit power of the signal of the N signals is the second configuration power of the signal.

Optionally, the N signals are selected from communication signals and sensing signals.

In a second aspect, the present application further discloses a communication method, including: transmitting power configuration information, where the power configuration information is used to determine a first transmit power of each signal of N signals, the first transmit power of the signal of the N signals is a maximum transmit power of the signal when the N signals are transmitted simultaneously, and N is an integer greater than 1; and transmitting the N signals simultaneously based on the first transmit powers of the N signals, where a transmit power of each signal is not greater than the first transmit power of the signal when the N signals are transmitted.

Optionally, the power configuration information includes a first configuration power of at least one signal of the N signals, and the first configuration power of the signal of the N signals is a configured maximum transmit power of the signal in a case that the N signals are transmitted simultaneously.

Optionally, the power configuration information includes a maximum combined transmit power of the N signals.

Optionally, the maximum combined transmit power is a sum of transmit powers of the N signals on one or more carriers.

Optionally, the power configuration information further includes a second configuration power of at least one signal of the N signals, and the second configuration power of the signal of the N signals is a configured maximum transmit power of the signal in a case that the N signals are not transmitted simultaneously.

Optionally, the N signals are selected from communication signals and sensing signals.

In a third aspect, the present application further discloses a communication apparatus, including: a communication module, configured to receive power configuration information; and a processing module, configured to determine a first transmit power of each signal of N signals based on the power configuration information, where the first transmit power of the signal of the N signals is a maximum transmit power of the signal when the N signals are transmitted simultaneously, and N is an integer greater than 1; where the communication module is further configured to transmit the N signals simultaneously based on the first transmit powers of the N signals, where a transmit power of each signal is not greater than the first transmit power corresponding to the signal when the N signals are transmitted.

In a fourth aspect, the present application further discloses a communication apparatus, including:

a communication module, configured to transmit power configuration information, where the power configuration information is used to determine a first transmit power of each signal of N signals, the first transmit power of the signal of the N signals is a maximum transmit power of the signal when the N signals are transmitted simultaneously, and N is an integer greater than 1; where the communication module is further configured to transmit the N signals simultaneously based on the first transmit powers of the N signals, where a transmit power of each signal is not greater than the first transmit power of the signal when the N signals are transmitted.

Optionally, the power configuration information includes a first configuration power of at least one signal of the N signals, and the first configuration power of the signal of the N signals is a configured maximum transmit power of the signal in a case that the N signals are transmitted simultaneously.

Optionally, the first transmit power of the signal of the N signals is the first configuration power of the signal.

Optionally, the power configuration information includes a maximum combined transmit power of the N signals.

Optionally, the maximum combined transmit power is a sum of transmit powers of the N signals on one or more carriers.

Optionally, the power configuration information further includes a second configuration power of at least one signal of the N signals, and the second configuration power of the signal of the N signals is a configured maximum transmit power of the signal in a case that the N signals are not transmitted simultaneously.

Optionally, the power configuration information further includes a bandwidth of each signal of the N signals.

Optionally, the first transmit power of each signal of the N signals is obtained by allocating the maximum combined transmit power based on a ratio of the bandwidth of the signal to a sum of the bandwidths of all the signals.

Optionally, the power configuration information further includes a second configuration power of at least one signal of the N signals.

In a fourth aspect, the present application further discloses a communication apparatus, including: a communication module, configured to transmit power configuration information, where the power configuration information is used to determine a first transmit power of each signal of N signals when transmission times overlap; where the communication module is further configured to receive the N signals using a transmit power that does not exceed the first transmit power of each signal when the transmission times overlap.

Optionally, the power configuration information includes a first configuration power of at least one signal of the N signals, and the first configuration power of the signal of the N signals is a configured maximum transmit power of the signal in a case that the N signals are transmitted simultaneously.

Optionally, the power configuration information includes a maximum combined transmit power of the N signals.

Optionally, the maximum combined transmit power is a sum of transmit powers of the N signals on one or more carriers.

Optionally, the power configuration information includes a second configuration power of at least one signal of the N signals, and the second configuration power of the signal of the N signals is a configured maximum transmit power of the signal in a case that the N signals are not transmitted simultaneously.

In a fifth aspect, a computer-readable storage medium is provided, where the computer-readable storage medium stores a computer program therein, and the computer program is executed by a computer to implement any one of the methods provided in the first aspect or the second aspect.

In a sixth aspect, a communication apparatus is provided, including: a memory and a processor; where the memory stores therein a computer program executable on the processor; and the processor executes the computer program to implement any one of the methods provided in the first aspect.

In a seventh aspect, a communication apparatus is provided, including: a memory and a processor; where the memory stores therein a computer program executable on the processor; and the processor executes the computer program to implement any one of the methods provided in the second aspect.

In an eighth aspect, a computer program product is provided, where the computer program product stores a computer program therein, and the computer program is executed by a computer to implement any one of the methods provided in the first aspect or the second aspect.

In a ninth aspect, a communication system is provided, including the terminal device and the network device described above.

In a tenth aspect, the present application further provides a chip (or a data transmission apparatus), where the chip stores a computer program therein, and when the computer program is executed by the chip, steps of the methods described above are implemented.

Compared to the prior art, the technical solutions of the embodiments of the present application have the following beneficial effects.

In the technical solutions of the present application, a network device can configure power configuration information for a terminal device, and the power configuration information can indicate a constrained power of N signals when transmission times overlap, then the terminal device can determine a first transmit power of each signal of the N signals when the transmission times overlap under constraint of a power indicated by the power configuration information, and the terminal device can transmit each signal with a transmit power that does not exceed the first transmit power of each signal. The technical solution of the present application utilizes the power configuration information to determine the transmit power of each signal, which ensures the rationality of a transmit power configuration of each signal and realizes power control and power sharing when multiple signals are transmitted simultaneously in a case where a total transmit power of the terminal device is constrained.

Furthermore, the power configuration information includes a first configuration power of each signal of the N signals, or the power configuration information includes a maximum combined transmit power of all the signals of the N signals. The technical solution of the present application directly indicates the first configuration power through the power configuration information, which enables the terminal device to determine the first transmit power based on the first configuration power; or indicates the maximum combined transmit power through the power configuration information, which enables the terminal device to calculate the first transmit power under constraint of the maximum combined power, achieving flexibility in power configuration.

## BRIEF DESCRIPTION OF DRAWINGS

FIG. 1 is a schematic diagram of a sensing signal in the prior art.
FIG. 2 is an interaction flowchart of a communication method provided in an embodiment of the present application.
FIG. 3 is a specific interaction flowchart of a communication method provided in an embodiment of the present application.
FIG. 4 is a specific interaction flowchart of another communication method provided in an embodiment of the present application.
FIG. 5 is a specific interaction flowchart of yet another communication method provided in an embodiment of the present application.
FIG. 6 is a schematic structure diagram of another communication configuration provided in an embodiment of the present application.
FIG. 7 is a schematic diagram of a hardware structure of a communication apparatus provided in an embodiment of the present application.

## DESCRIPTION OF EMBODIMENTS

A communication system to which the embodiments of the present application are applicable includes, but is not limited to, a long term evolution (Long Term Evolution, LTE) system, a 5th-generation (5th-generation, 5G) system, a NR system, and a future evolution system or a multiple communication fusion system.

Where the 5G system can be a non-standalone (Non-StandAlone, NSA) 5G system or a standalone (StandAlone, SA) 5G system. The technical solutions of the present application are also applicable to different network architectures, including but not limited to a relay network architecture, a dual-link architecture, a vehicle-to-everything (Vehicle-to-Everything) architecture, and other architectures.

The present application mainly relates to communication between a terminal device and a network device. Where.

The network device in the embodiments of the present application may also be referred to as an access network device, for example, it may be a base station (Base Station, BS) (also referred to as a base station device), the network device is an apparatus deployed in a radio access network (Radio Access Network, RAN) to provide a wireless communication function. For example, in a 2nd-generation (2nd-Generation, 2G) network, a device that provides a base station function includes a base transceiver station (Base Transceiver Station, BTS), in a 3rd-generation (3rd-Generation, 3G) network, a device that provides a base station function includes a node B (NodeB), in a 4th-generation (4th-Generation, 4G) network, a device that provides a base station function includes an evolved node B (evolved NodeB, eNB), in a wireless local area network (Wireless Local Area Networks, WLAN), a device that provides a base station function is an access point (Access Point, AP), and a device that a provide base station function in NR includes a next generation Node Base station (next generation Node Base station, gNB) and an evolved node B (ng-eNB), where the gNB and the terminal device communicate using a NR technology, and the ng-eNB and the terminal device communicate using an evolved universal terrestrial radio access (Evolved Universal Terrestrial Radio Access, E-UTRA) technology, and both the gNB and the ng-eNB can be connected to a 5G core network. The network device in the embodiments of the present application also includes a device that provides a base station function in a future new communication system, etc.

The terminal device in the embodiments of the present application may refer to various forms of access terminals, user units, user stations, mobile stations, mobile stations (Mobile Stations, MSs), remote stations, remote terminals, mobile devices, user terminals, wireless communication devices, user agents or user devices. The terminal device may also be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device with a wireless communication function, a computing device or other processing devices, vehicle-mounted devices, wearable devices connected to a wireless modem, a terminal device in a future 5G network or a terminal device in a future evolved public land mobile network (Public Land Mobile Network, PLMN), etc., to which the embodiments of the present application are not limited. The terminal device may also be referred to as a user equipment (User Equipment, UE), a terminal, etc.

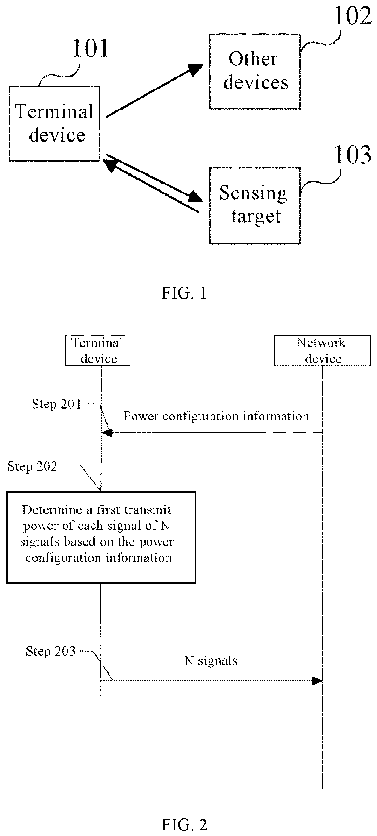

Please refer to FIG. 1, when a terminal device 101 transmits a sensing signal to a sensing target 103, a propagation path of the sensing signal is from the terminal device 101 to the sensing target 103, and then the sensing target 103 reflects the sensing signal to the terminal device 101, and the terminal device 101 receives the sensing signal. This is to say, when the terminal device 101 performs a single-station sensing, the sensing signal is bidirectional propagated, and the terminal device 101 is both a transmitter and a receiver of the sensing signal. In this way, when the terminal device 101 controls a transmit power of the sensing signal, it is necessary to calculate a path loss of the bidirectional propagation between the terminal device 101 and the sensing target 103, and a reflection loss of the sensing target 103.

In addition, the terminal device 101 can also transmit a communication signal to other devices 102 or to a network device for communication. The communication signal may specifically be data or a signaling, etc.

As described in the background, when multiple signals such as sensing signals and/or communication signals need to be transmitted simultaneously, how to achieve power control is a problem that needs to be solved urgently.

The present application provides a method, where a network device can transmit power configuration information to a terminal device, and the power configuration information can be used to determine a constrained power of N signals when transmission times overlap, then the terminal device can determine a first transmit power of each signal of the N signals when the transmission times overlap under constraint of a power indicated by a power configuration indication information, and the terminal device can transmit each signal with a transmit power that does not exceed the first transmit power of each signal. The technical solution of the present application utilizes the power configuration information to determine the transmit power of each signal, which ensures the rationality of a transmit power configuration of each signal and realizes power sharing when multiple signals are transmitted simultaneously in a case where a total transmit power of the terminal device is constrained.

Referring to FIG. 2, a communication method provided by the present application includes the following steps:

step 201, a network device transmits power configuration information; and accordingly, a terminal device receives the power configuration information;
step 202, the terminal device determines a first transmit power of each signal of N signals based on the power configuration information; and
step 203, the terminal device transmits the N signals simultaneously based on the first transmit powers of the N signals.

It should be pointed out that a serial number of each step in this embodiment does not limit an execution order of the steps.

It can be understood that, in a specific implementation, the communication method can be implemented in a form of a software program, and the software program runs in a processor integrated inside a chip or a chip module. The method can also be implemented by combining software with hardware, which is not limited in the present application.

In this embodiment, the N signals may be selected from communication signals and sensing signals. That is to say, the N signals may be N communication signals, or N sensing signals, or a portion of the N signals may be communication signals and a remaining portion of the N signals may be sensing signals.

In a specific embodiment, the number of the N signals may be two, where one signal is a sensing signal and the other signal is a communication signal. The sensing signal and the communication signal can be transmitted simultaneously in a frequency division multiplexing manner on the same carrier or different carriers within a specific frequency band.

It should be noted that the number or the type of the N signals can be configured based on an actual application requirement, which is not limited in the present application.

In this embodiment, the network device can configure the power configuration information for the terminal device, and the power configuration information can indicate a constrained power of the N signals when transmission times overlap, which, for example, may be a constrained power of each signal or a total constrained power. This is because a total transmit power of the terminal device is constrained, when there are multiple signals need to be transmitted, a transmit power of each signal needs to be subject to a certain constraint. In addition, since different signals have different priorities, it is necessary to reasonably allocate a transmit power to each signal to ensure a normal transmission of each signal.

In a specific implementation, the power configuration information configured by the network device can indicate a respective constrained power of each signal of the N signals when the transmission times overlap. Accordingly, the terminal device determines the first transmit power of each signal based on the respective constrained power of each signal. The power configuration information can also indicate a total constrained power of the N signals when the transmission times overlap. Accordingly, the terminal device determines the first transmit power of each signal based on the total constrained power.

In this embodiment, the first transmit power of the signal represents a maximum transmit power of the signal when the N signals are transmitted simultaneously.

Taking that the N signals include a first signal and a second signal, and the power configuration information includes different contents as examples to illustrate individually and in detail in the following.

1, the power configuration information includes a first configuration power $P'_{max1}$ of the first signal and a first configuration power $P'_{max2}$ of the second signal when transmission times overlap.

Different from the first transmit power representing a maximum transmit power of the signal when the signal is actually transmitted, the first configuration power of a signal in this embodiment is a maximum transmit power of the signal configured by the network device in a case where N signals are transmitted simultaneously.

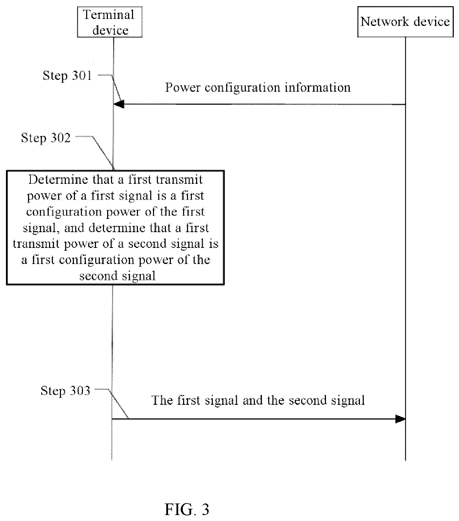

Accordingly, please refer to FIG. 3, in a specific implementation of step 302, when transmission times of the first signal and the second signal overlap, the terminal device determines that a first transmit power $P_1$ of the first signal is the first configuration power $P'_{max1}$ of the first signal, and determines that a first transmit power $P_2$ of the second signal is the first configuration power $P'_{max2}$ of the second signal.

In a specific implementation of step 303, the terminal device transmits the first signal with a transmit power that does not exceed the first transmit power $P_1$ of the first signal, and transmits the second signal with a transmit power that does not exceed the first transmit power $P_2$ of the second signal. In other words, an actual transmit power of the first signal transmitted by the terminal device is less than or equal to the first transmit power $P_1$ of the first signal, and an actual transmit power of the second signal transmitted by the terminal device is less than or equal to the first transmit power $P_2$ of the second signal.

2, the power configuration information includes a second configuration power $P_{max1}$ of the first signal and a second configuration power $P_{max2}$ of the second signal when the transmission times do not overlap, and a maximum combined transmit power $P_{max,all}$ of all the signals in the first signal and the second signal.

In this embodiment, the maximum combined transmit power is a sum of transmit powers of the first signal and the second signal on one carrier, or the maximum combined transmit power is a sum of transmit powers of the first signal and the second signal on multiple carriers.

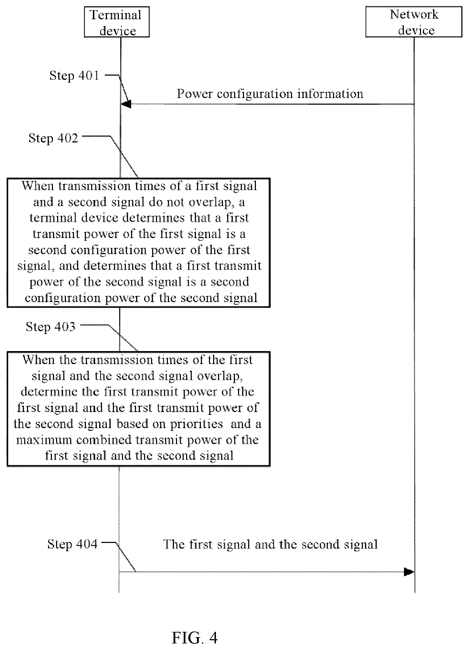

Accordingly, please refer to FIG. 4, in a specific implementation of step 402, when the transmission times of the first signal and the second signal do not overlap, the terminal device determines that the first transmit power $P_1$ of the first signal is the second configuration power $P_{max1}$ of the first signal, and determines that the first transmit power $P_2$ of the second signal is the second

configuration power $P_{max2}$ of the second signal.

In a specific implementation of step 403, when the transmission times of the first signal and the second signal overlap, the first transmit power of the first signal and the first transmit power of the second signal are determined based on a priority order and the maximum combined transmit power $P_{max,all}$ of the first signal and the second signal. Specifically, if a priority of the first signal is higher than a priority of the second signal, then the first transmit power $P_1$ of the first signal is determined to be the second configuration power $P_{max1}$ of the first signal, and the first transmit power $P_2$ of the second signal is determined to be a difference between the maximum combined transmit power $P_{max,all}$ and the first transmit power $P_1$ of the first signal, that is, $P_2 = P_{max,all} - P_1$.

Conversely, if the priority of the second signal is higher than the priority of the first signal, the first transmit power $P_2$ of the second signal is determined to be the second configuration power $P_{max2}$ of the second signal, and the first transmit power $P_1$ of the first signal is determined to be a difference between the maximum combined transmit power $P_{max,all}$ and the first transmit power $P_2$ of the second signal, that is, $P_1 = P_{max,all} - P_2$.

It can be understood that, in an actual implementation, the terminal device selectively performs one or both of step 402 and step 403.

In a specific implementation of step 404, the terminal device transmits the first signal with a transmit power that does not exceed the first transmit power $P_1$ of the first signal, and transmits the second signal with a transmit power that does not exceed the first transmit power $P_2$ of the second signal.

The above embodiments are illustrated by taking an example where the terminal device transmits the first signal and the second signal simultaneously. In an actual implementation, the terminal device may need to transmit more signals simultaneously. In this case, the terminal device can allocate the maximum combined transmit power in the following manner.

The terminal device allocates the first transmit power to each signal in a descending order of the priorities of the N signals until an allocation of the maximum combined transmit power $P_{max,all}$ is completed, where for K signals with allocated first transmit powers, the first transmit power of each signal of the K signals is the second configuration power of the signal, or the first transmit powers of K-1 signals with highest priorities of the K signals are the second configuration powers of the signals, and the first transmit power of the $K^{th}$ signal is a power difference between the maximum combined transmit power $P_{max,all}$ and a sum of the first transmit powers of the K-1 signals, and K is less than or equal to N.

3, the power configuration information includes the maximum combined transmit power $P_{max,all}$ of all the signals in the first signal and the second signal, a bandwidth $B_1$ of the first signal and a bandwidth $B_2$ of the second signal.

Accordingly, when the transmission times of the first signal and the second signal overlap, the terminal device calculates a sum of the bandwidth $B_1$ of the first signal and the bandwidth $B_2$ of the second signal as a total bandwidth; and calculates a ratio of the bandwidth $B_1$ of the first signal to the total bandwidth, and a product of the maximum combined transmit power $P_{max,all}$ and the ratio is the first transmit power $P_1$ of the first signal, that is, $P_1 = \dfrac{B_1}{B_1 + B_2} \times P_{max,all}$. The first transmit power of the second signal is $P_2 = \dfrac{B_2}{B_1 + B_2} \times P_{max,all}$.

The terminal device transmits the first signal with a transmit power that does not exceed the first transmit power $P_1$ of the first signal, and transmits the second signal with a transmit power that does not exceed the first transmit power $P_2$ of the second signal.

The above embodiments are illustrated by taking an example where the terminal device transmits the first signal and the second signal simultaneously. In an actual implementation, the terminal device may need to transmit more signals simultaneously. In this case, the terminal device can allocate the maximum combined transmit power in the following manner.

For each signal, a ratio of a bandwidth of the signal to a sum of bandwidths of all signals is calculated; the maximum combined transmit power is proportionally allocated based on the ratio corresponding to each signal to obtain the first transmit power of each signal.

In another non-limiting embodiment, when the terminal device simultaneously transmits the first signal and the second signal, the terminal device can also allocate the maximum combined transmit power $P_{max,all}$ based on a bandwidth ratio of the bandwidth $B_1$ of the first signal to the bandwidth $B_2$ of the second signal and a preset adjustment coefficient.

Specifically, the first transmit power of the first signal is calculated by using the following formula:

$$P_1 = \alpha \times \dfrac{B_1}{B_2} \times P_{max,all}$$, where $\alpha$ is the preset adjustment coefficient, and the preset adjustment coefficient is configured to be that a product of the preset adjustment coefficient and the bandwidth ratio is less than or equal to

1, that is, $\alpha \times \dfrac{B_1}{B_2}$ is always less than or equal to 1. Accordingly, the first transmit power of the second signal is calculated by using the following formula:

$$P_2 = \left(1 - \alpha \times \dfrac{B_1}{B_2}\right) \times P_{max,all}.$$

It should be noted that the preset adjustment

coefficient $\alpha$ may be a value specified by a communication standard protocol, or it may be pre-configured by a base station, which is not limited in the present application.

4, the power configuration information includes the first configuration power $P'_{max1}$ of the first signal and the first configuration power $P'_{max2}$ of the second signal when the transmission times overlap, and the second configuration power $P_{max1}$ of the first signal and the second configuration power $P_{max2}$ of the second signal when the transmission times do not overlap.

In this embodiment, when the transmission times of the first signal and the second signal overlap, the terminal device determines that the first transmit power $P_1$ of the first signal is the first configuration power $P'_{max1}$ of the first signal, and determines that the first transmit power $P_2$ of the second signal is the first configuration power $P'_{max2}$ of the second signal.

When the transmission times of the first signal and the second signal do not overlap, the terminal device determines that the first transmit power $P_1$ of the first signal is the second configuration power $P_{max1}$ of the first signal, and determines that the first transmit power $P_2$ of the second signal is the second configuration power $P_{max2}$ of the second signal.

In a specific application scenario, the N signals may be periodic signals, and each signal of the N signals has a transmission period, then it may happen that the transmission times of the N signals do not overlap at a certain moment, and the transmission times of the N signals overlap at a next moment. For example, taking the first signal and the second signal as an example, a transmission period of the first signal is 4 milliseconds (ms), and a transmission period of the second signal is 8ms, then at the 4th ms, the transmission times of the first signal and the second signal do not overlap, and at the 8th ms, the transmission times of the first signal and the second signal overlap.

In this case, the terminal device needs to calculate the first transmit powers of the N signals when the transmission times overlap, and the first transmit powers of the N signals when the transmission times do not overlap, respectively. This requires that the power configuration information can indicate constrained powers of the N signals when the transmission times overlap and when the transmission times do not overlap.

In a specific implementation, the power configuration information includes the second configuration power $P_{max1}$ of the first signal and the second configuration power $P_{max2}$ of the second signal when the transmission times do not overlap, and the maximum combined transmit power $P_{max,all}$ of all the signals in the first signal and the second signal. Please refer to the description of manner 2 for details.

In another specific embodiment, the power configuration information includes the second configuration power $P_{max1}$ of the first signal and the second configuration power $P_{max2}$ of the second signal when the transmission times do not overlap, the maximum combined transmit power $P_{max,all}$ of all the signals in the first signal and the second signal, the bandwidth $B_1$ of the first signal and the bandwidth $B_2$ of the second signal.

In yet another specific embodiment, the power configuration information includes the second configuration power $P_{max1}$ of the first signal and the second configuration power $P_{max2}$ of the second signal when the transmission times do not overlap, and the first configuration power $P'_{max1}$ of the first signal and the first configuration power $P'_{max2}$ of the second signal when the transmission times overlap.

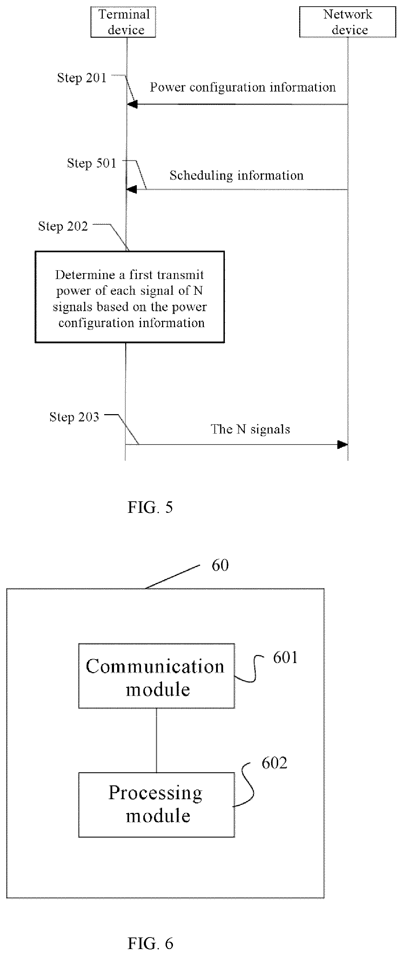

In another specific application scenario, please refer to FIG. 5. Before the terminal device determines the first transmit power of each signal, in step 501, the terminal device can also receive scheduling information of each signal, where the scheduling information of each signal is used to indicate a transmission resource of each signal. Accordingly, the network device configures and transmits the scheduling information of each signal.

In this embodiment, the terminal device determines the transmission resource of each signal based on the scheduling information of each signal, and transmits each signal on the transmission resource of each signal with a transmit power that does not exceed the first transmit power of each signal.

For more specific implementations of the embodiments of the present application, please refer to the aforementioned embodiments, which will not be repeated here.

Please refer to FIG. 6, FIG. 6 shows a communication apparatus 60. When the above communication apparatus 60 is applied to a terminal device, the communication device 60 can include:

a communication module 601, configured to receive power configuration information; and
a processing module 602, configured to determine a first transmit power of each signal of N signals based on the power configuration information when transmission times overlap, the communication module 501 is further configured to transmit each signal using a transmit power that does not exceed the first transmit power of each signal when the transmission times overlap.

In a specific implementation, the above communication apparatus 60 may correspond to a chip with a communication function in a terminal device, such as a system-on-a-chip (System-On-a-Chip, SOC), a baseband chip, etc., or correspond to a chip module with a communication function in a terminal device, or correspond to a chip module with a data processing function chip, or correspond to a terminal device.

When the above communication apparatus 60 is applied to a network device, the communication apparatus 60 may include: a communication module 601, configured to transmit power configuration information, where the power configuration information is used to determine a first transmit power of each signal of N signals when transmission times overlap; the communication module 601 is further configured to receive the N signals using a transmit power that does not exceed the first transmit power of each signal when the transmission times overlap.

In a specific implementation, the above communication apparatus 60 may correspond to a chip with a communication function in a network device, such as a SOC, a baseband chip, etc., or correspond to a chip module with a communication function in a network device, or correspond to a chip module with a data processing function chip, or correspond to a network device.

For other related descriptions about the communication apparatus 60, reference may be made to the related descriptions in the aforementioned embodiments, which will not be repeated here.

Each module/unit included in each apparatus and product described in the above embodiments may be a software module/unit or a hardware module/unit, or may be partially the software module/unit and partially the hardware module/unit. For example, for each apparatus or product applied to or integrated in a chip, each module/unit included therein may be implemented in a form of hardware such as a circuit, or at least part of the modules/units may be implemented in a form of a software program, the software program run on a processor integrated inside a chip, and remaining (if any) modules/units may be implemented in the form of hardware such as a circuit; for each apparatus or product applied to or integrated in a chip module, each module/unit included therein may be implemented in the form of hardware such as a circuit, and different modules/units may be located in the same component (such as a chip, a circuit module, etc.) or different components of the chip module, or, at least part of the modules/units may be implemented in the form of a software program, the software program run on a processor integrated inside the chip module, and remaining (if any) modules/units may be implemented in the form of hardware such as a circuit; for each apparatus and product applied to or integrated in a terminal device, each module/unit included therein may be implemented in the form of hardware such as a circuit, and different modules/units may be located in the same component (such as a chip, a circuit module, etc.) or different components of the terminal device, at least part of the modules/units may be implemented in the form of a software program, the software program run on a processor integrated inside the terminal device, and remaining (if any) modules/units may be implemented in the form of hardware such as a circuit.

An embodiment of the present application further discloses a storage medium, the storage medium is a computer-readable storage medium on which a computer program is stored, when the computer program is run, steps of the method shown in FIG. 1 to FIG. 3 can be executed. The storage medium may include a read-only memory (Read-Only Memory, ROM), a random access memory (Random Access Memory, RAM), a magnetic disk or an optical disk, etc. The storage medium may also include a non-volatile (non-volatile) memory or a non-transitory (non-transitory) memory, etc.

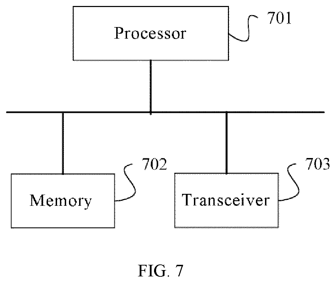

Please refer to FIG. 7, an embodiment of the present application further provides a schematic diagram of a hardware structure of a communication apparatus. The apparatus includes a processor 701, a memory 702, and a transceiver 703.

The processor 701 may be a general-purpose central processing unit (central processing unit, CPU), a microprocessor, an application-specific integrated circuit (application-specific integrated circuit, ASIC), or one or more integrated circuits for controlling an execution of a program of the present application. The processor 701 may also include multiple CPUs, and the processor 701 may be a single-core (single-CPU) processor or a multi-core (multi-CPU) processor. A processor herein may refer to one or more devices, circuits, or processing cores for processing data (e.g., computer program instructions).

The memory 702 may be a ROM or other type of static storage device that can store static information and instructions, a RAM or other type of dynamic storage device that can store information and instructions, or an electrically erasable programmable read-only memory (electrically erasable programmable read-only memory, EEPROM), a compact disc read-only memory (compactdisc read-only memory, CD-ROM) or other optical disc storage, an optical disc storage (including a compressed optical disc, a laser disc, an optical disc, a digital versatile disc, a Blu-ray disc, etc.), a magnetic disk storage medium or other magnetic storage device, or any other medium that can be used to carry or store desired program codes in a form of an instruction or a data structure and can be accessed by a computer, and the embodiments of the present application do not impose any limitation thereon. The memory 702 may exist independently (in this case, the memory 702 may be located outside the apparatus or inside the apparatus), or may be integrated with the processor 701. The memory 702 may include computer program codes. The processor 701 is configured to execute the computer program codes stored in the memory 702, so as to implement the method provided in the embodiments of the present application.

The processor 701, the memory 702 and the transceiver 703 are connected via a bus. The transceiver 703 is configured to communicate with other devices or communication networks. Optionally, the transceiver 703 may include a transmitter and a receiver. A device in the transceiver 703 for implementing a receiving function can be regarded as a receiver, and the receiver is configured to perform the receiving steps in the embodiments of the present application. A device transmitter for implementing a transmitting function can be regarded as a transmitter, and the transmitter is configured to perform the transmitting steps in the embodiment of the present application.

When a structural diagram shown in FIG. 7 is used to illustrate a structure of the terminal device involved in the above embodiments, the processor 701 is configured to control and manage actions of the terminal device. For example, the processor 701 is configured to support the terminal device to execute step 201-, step 202 and step 203 in FIG. 2, or step 301, step 302 and step 303 in FIG. 3, or step 401, step 402, step 403 and step 404 in FIG. 4, or step 501 in FIG. 5, and/or actions performed by the terminal device in other processes described in the embodiments of the present application. The processor 701 may communicate with other network entities, for example, the above network device, through the transceiver 703. The memory 702 is configured to store program codes and data of the terminal device.

When a structural diagram shown in FIG. 7 is used to illustrate a structure of the network device involved in the above embodiments, the processor 701 is configured to control and manage actions of the network device. For example, the processor 701 is configured to support the network device to execute step 201 and step 203 in FIG. 2, or step 301 and step 303 in FIG. 3, or step 401 and step 404 in FIG. 4, or step 201, step 501 and step 203 in FIG. 5, and/or actions performed by the network device in other processes described in the embodiments of the present application. The processor 701 may communicate with other network entities, for example, the above terminal device, through the transceiver 703. The memory 702 is configured to store program codes and data of the network device.

The embodiments of the present application define a unidirectional communication link from an access network to a terminal device as a downlink, data transmitted on the downlink is downlink data, and a transmission direction of the downlink data is called a downlink direction; and a unidirectional communication link from a terminal device to an access network is an uplink, data transmitted on the uplink is uplink data, and a transmission direction of the uplink data is called a uplink direction.

It should be understood that the term "and/or" herein merely a describes an association relationship of associated objects, and indicates that three relationships can exist. For example, A and/or B can mean that: A exists alone, A and B exist at the same time, and B exists alone. In addition, the character "/" generally indicates that previous and next associated objects are in an "or" relationship.

The "multiple" appearing in the embodiments of the present application means two or more.

The first, second and other descriptions appearing in the embodiments of the present application are only for a purpose of illustrating and distinguishing described objects, and are not in any order, nor do they indicate any special limitation on the number of devices in the embodiments of the present application, and do not constitute any limitation on the embodiments of the present application.

The "connection" appearing in the embodiments of the present application refers to various connection methods such as a direct connection or an indirect connection to achieve communication between devices, and the embodiments of the present application do not impose any limitations thereon.

The above embodiments may be implemented in whole or in part through software, hardware, firmware or any other combination. When implemented using software, the above embodiments may be implemented in whole or in part in a form of a computer program product. The computer program product includes one or more computer instructions or computer programs. When the computer instructions or computer programs are loaded or executed on a computer, the processes or functions described in the embodiments of the present application are generated in whole or in part. The computer may be a general-purpose computer, a special purpose computer, a computer network, or other programmable devices. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center via a wired or a wireless manner.

It should be understood that in each embodiment of the present application, a size of a serial number of each of the above processes does not imply an order of an execution, and an order of the execution of each process shall be determined by a function and an inherent logic thereof, and shall not constitute any limitation on the implementation process of the embodiments of the present application.

In several embodiments provided in the present application, it should be understood that the disclosed methods, apparatuses, and systems may be implemented in other ways. For example, the apparatus embodiments described above are merely illustrative; for example, a division of units is merely a logical function division, and there may be other division methods in an actual implementation; for example, multiple units or components may be combined or integrated into another system, or some features may be ignored or not executed. Another point is that a mutual coupling or a direct coupling or a communication connection shown or discussed may be an indirect coupling or a communication connection through some interfaces, apparatuses or units, which may be electrical, mechanical or other forms.

A unit described as a separate component may or may not be physically separated, and a component shown as a unit may or may not be a physical unit, that is, it may be located in one place or distributed over multiple network units. Some or all of the units may be selected based on an actual requirement to achieve a purpose of a solution of the present embodiment.

In addition, each functional unit in each embodiment of the present application may be integrated into one processing unit, or each unit may be physically included separately, or two or more units may be integrated into one unit. The above integrated unit can be implemented in a form of hardware or in a form of hardware plus software functional units.

The above integrated unit implemented in a form of a software functional unit can be stored in a computer-readable storage medium. The above software functional unit is stored in a storage medium, including a number of instructions for enabling a computer device (which may be a personal computer, a server, or a network device, etc.) to execute some steps of the method described in each embodiment of the present application.

Although the present application is disclosed as above, the present application is not limited thereto. Any person skilled in the art may make various changes and modifications without departing from the spirit and scope of the present application. Therefore, the scope of protection of the present application shall be based on the scope defined by the claims.

## Claims

1. A communication method, comprising:

    receiving power configuration information;
    determining a first transmit power of each signal of N signals based on the power configuration information, wherein the first transmit power of the signal of the N signals is a maximum transmit power of the signal when the N signals are transmitted simultaneously, and N is an integer greater than 1; and
    transmitting the N signals simultaneously based on the first transmit powers of the N signals, wherein a transmit power of each signal is not greater than the first transmit power of the signal when the N signals are transmitted.

2. The communication method according to claim 1, wherein the power configuration information comprises a first configuration power of at least one signal of the N signals, and the first configuration power of the signal of the N signals is a configured maximum transmit power of the signal in a case that the N signals are transmitted simultaneously.

3. The communication method according to claim 2, wherein the first transmit power of the signal of the N signals is the first configuration power of the signal.

4. The communication method according to any one of claims 1 to 3, wherein the power configuration information comprises a maximum combined transmit power of the N signals.

5. The communication method according to claim 4, wherein the maximum combined transmit power is a sum of transmit powers of the N signals on one or more carriers.

6. The communication method according to claim 4, wherein the power configuration information further comprises a second configuration power of at least one signal of the N signals, and the second configuration power of the signal of the N signals is a configured maximum transmit power of the signal in a case that the N signals are not transmitted simultaneously.

7. The communication method according to claim 6, wherein each signal of the N signals has a priority, and the determining the first transmit power of each signal of the N signals based on the power configuration information comprises:
    allocating the first transmit power to each signal in a descending order of the priorities of the N signals until an allocation of the maximum combined transmit power is completed, wherein for K signals with allocated first transmit powers, the first transmit power of each signal of the K signals is the second configuration power of the signal, or the first transmit powers of K-1 signals with highest priorities of the K signals are the second configuration powers of the signals, and the first transmit power of the $K^{th}$ signal is a power difference between the maximum combined transmit power and a sum of the first transmit powers of the K-1 signals, and K is less than or equal to N.

8. The communication method according to claim 4, wherein the power configuration information further comprises a bandwidth of each signal of the N signals.

9. The communication method according to claim 8, wherein the first transmit power of each signal of the N signals is obtained by allocating the maximum combined transmit power based on a ratio of the bandwidth of the signal to a sum of the bandwidths of all the signals.

10. The communication method according to claim 1, wherein the power configuration information further comprises a second configuration power of at least one signal of the N signals.

11. The communication method according to claim 10, further comprising:

    determining a second transmit power of each signal of the N signals based on the power configuration information, wherein the second transmit power of the signal of the N signals is a maximum transmit power of the signal when the N signals are not transmitted simultaneously; and

transmitting the N signals time-shared based on the second transmit powers of the N signals, wherein a transmit power of each signal is not greater than the second transmit power of the signal when the N signals are transmitted.

12. The communication method according to claim 11, wherein the second transmit power of the signal of the N signals is the second configuration power of the signal.

13. The communication method according to any one of claims 1 to 12, wherein the N signals are selected from communication signals and sensing signals.

14. A communication method, comprising:

transmitting power configuration information, wherein the power configuration information is used to determine a first transmit power of each signal of N signals, the first transmit power of the signal of the N signals is a maximum transmit power of the signal when the N signals are transmitted simultaneously, and N is an integer greater than 1; and
transmitting the N signals simultaneously based on the first transmit powers of the N signals, wherein a transmit power of each signal is not greater than the first transmit power of the signal when the N signals are transmitted.

15. The communication method according to claim 14, wherein the power configuration information comprises a first configuration power of at least one signal of the N signals, and the first configuration power of the signal of the N signals is a configured maximum transmit power of the signal in a case that the N signals are transmitted simultaneously.

16. The communication method according to claim 14, wherein the power configuration information comprises a maximum combined transmit power of the N signals.

17. The communication method according to claim 16, wherein the maximum combined transmit power is a sum of transmit powers of the N signals on one or more carriers.

18. The communication method according to claim 14, wherein the power configuration information comprises a second configuration power of at least one signal of the N signals, and the second configuration power of the signal of the N signals is a configured maximum transmit power of the signal in a case that the N signals are not transmitted simultaneously.

19. The communication method according to any one of claims 14 to 18, wherein the N signals are selected from communication signals and sensing signals.

20. A communication apparatus, comprising:

a communication module, configured to receive power configuration information; and
a processing module, configured to determine a first transmit power of each signal of N signals based on the power configuration information, wherein the first transmit power of the signal of the N signals is a maximum transmit power of the signal when the N signals are transmitted simultaneously, and N is an integer greater than 1;
wherein the communication module is further configured to transmit the N signals simultaneously based on the first transmit powers of the N signals, wherein a transmit power of each signal is not greater than the first transmit power corresponding to the signal when the N signals are transmitted.

21. A communication apparatus, comprising:

a communication module, configured to transmit power configuration information, wherein the power configuration information is used to determine a first transmit power of each signal of N signals, the first transmit power of the signal of the N signals is a maximum transmit power of the signal when the N signals are transmitted simultaneously, and N is an integer greater than 1;
wherein the communication module is further configured to transmit the N signals simultaneously based on the first transmit powers of the N signals, wherein a transmit power of each signal is not greater than the first transmit power of the signal when the N signals are transmitted.

22. A computer-readable storage medium, wherein the computer-readable storage medium stores a computer program therein, and when the computer program is executed by a processor, steps of the communication method according to any one of claims 1 to 19 are implemented.

23. A terminal device, comprising: a memory, and a processor; wherein the memory stores therein a computer program executable on the processor; and the processor, when executing the computer program, implements steps of the communication method according to any one of claims 1 to 13.

24. A network device, comprising: a memory, and a processor; wherein the memory stores therein a computer program executable on the processor; and the processor, when executing the computer program, implements steps of the communication method according to any one of claims 14 to 18.

FIG. 1

FIG. 2

FIG. 3

Terminal device

Network device

Step 401

Power configuration information

Step 402

When transmission times of a first signal and a second signal do not overlap, a terminal device determines that a first transmit power of the first signal is a second configuration power of the first signal, and determines that a first transmit power of the second signal is a second configuration power of the second signal

Step 403

When the transmission times of the first signal and the second signal overlap, determine the first transmit power of the first signal and the first transmit power of the second signal based on priorities and a maximum combined transmit power of the first signal and the second signal

Step 404

The first signal and the second signal

FIG. 4

Terminal device | Network device

Step 201 — Power configuration information

Step 501 — Scheduling information

Step 202 —

Determine a first transmit power of each signal of N signals based on the power configuration information

Step 203 — The N signals

FIG. 5

60

Communication module — 601

Processing module — 602

FIG. 6

FIG. 7

## INTERNATIONAL SEARCH REPORT

| International application No. |
|---|
| **PCT/CN2023/109832** |

**A. CLASSIFICATION OF SUBJECT MATTER**

H04W52/34(2009.01)i; H04W52/04(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP: 功率控制, 功控, 发射功率, 发送功率, 最大发射功率, 最大发送功率, 大于, 小于, Power, control, Transmit, Max, Greater, more, Less, than

**C. DOCUMENTS CONSIDERED TO BE RELEVANT**

| Category* | Citation of document, with indication, where appropriate, of the relevant passages | Relevant to claim No. |
|---|---|---|
| X | CN 110381576 A (HUAWEI TECHNOLOGIES CO., LTD.) 25 October 2019 (2019-10-25) claims 1-23, description, paragraphs [0131]-[0136], and figures 1-17 | 1-24 |
| X | CN 110858998 A (VIVO COMMUNICATION TECHNOLOGY CO., LTD.) 03 March 2020 (2020-03-03) claims 1-14, and figures 1-5 | 1-24 |
| A | CN 112399545 A (HUAWEI TECHNOLOGIES CO., LTD.) 23 February 2021 (2021-02-23) entire document | 1-24 |
| A | US 2016150484 A1 (LG ELECTRONICS INC.) 26 May 2016 (2016-05-26) entire document | 1-24 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 October 2023** | **23 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/109832**

| Patent document cited in search report | | | Publication date (day/month/year) | Patent family member(s) | | | Publication date (day/month/year) |
|---|---|---|---|---|---|---|---|
| CN | 110381576 | A | 25 October 2019 | WO | 2020248897 | A1 | 17 December 2020 |
| CN | 110858998 | A | 03 March 2020 | | None | | |
| CN | 112399545 | A | 23 February 2021 | | None | | |
| US | 2016150484 | A1 | 26 May 2016 | US | 9516608 | B2 | 06 December 2016 |
| | | | | KR | 20160030105 | A | 16 March 2016 |
| | | | | WO | 2015005601 | A1 | 15 January 2015 |

Form PCT/ISA/210 (patent family annex) (July 2022)

**REFERENCES CITED IN THE DESCRIPTION**

**Patent documents cited in the description**

- CN 202210907673X